# EUROPÄISCHE PATENTSCHRIFT

(11) **EP 3 592 907 B1**
(45) Veröffentlichungstag und Bekanntmachung des Hinweises auf die Patenterteilung: **03.06.2020**
(21) Anmeldenummer: 19711022.4
(22) Anmeldetag: 06.03.2019
(51) Int. Cl.: E03D 9/03, E03D 9/02

(54) **BEHÄLTNIS FÜR EIN WC-KÖRBCHEN**
CONTAINER FOR A TOILET RIM BLOCK CAGE
RÉCIPIENT POUR CUVETTE WC

(30) Priorität: 09.03.2018 DE 102018105474; 18.04.2018 DE 102018109257
(43) Veröffentlichungstag der Anmeldung: 15.01.2020
(73) Patentinhaber: Buck-Chemie GmbH, 71083 Herrenberg (DE)
(72) Erfinder: LEIPOLD, Joachim, 72760 Reutlingen (DE); BRUNECKER, Frank, 72108 Rottenburg a.N. (DE); FRITZ, Matthias, 72810 Gomaringen (DE); HERMANN, Sascha, 71083 Herrenberg (DE)
(74) Vertreter: Mammel und Maser
(86) Internationale Anmeldenummer: PCT/EP2019/055529
(87) Internationale Veröffentlichungsnummer: WO 2019/170724

(56) Entgegenhaltungen:
- EP-A1- 3 121 342
- EP-A1- 3 263 785
- WO-A1-2016/040341

## Beschreibung

### Behältnis für ein WC-Körbchen

Die vorliegende Erfindung betrifft ein Behältnis mit Öffnungen zur Bevorratung von Reinigungsmitteln für WC-Körbchen, das Herstellungsverfahren und die Verwendung eines solchen Behältnisses.

Ein Großteil der bekannten stückförmigen Reinigungsmittel sind so genannte "Rimblocks", die in körbchen- oder käfigartigen Behältnissen mit einer hakenförmigen Hängevorrichtung, den sogenannten WC-Körbchen, am Rand der Toilette befestigt werden. Die Behältnisse weisen Eintritts- und Austrittsöffnungen für das Spülwasser auf. Das in dem Behältnis befindliche Mittel wird bei jedem Spülvorgang von dem Spülwasser überströmt. Hierdurch wird bei jeder Spülung ein geringer Anteil des Reinigungsmittels unter Freisetzung von Tensiden, Duftstoffen etc. aufgelöst, wodurch dann die gewünschte Reinigung des Toilettenbeckens und des Toilettensumpfs und die gewünschte Beduftung erzielt werden.

Im Allgemeinen weisen die Reinigungsmittel Duftstoffe auf und sind für ein optisch ansprechendes Aussehen eingefärbt.

Im Stand der Technik gibt es eine Vielzahl unterschiedlicher WC-Körbchen. Viele WC-Körbchen weisen zwei Schalenhälften mit Eintritts- und Austrittsöffnungen auf, die mit einem Scharnier miteinander verbunden sind, so dass sich das WC-Körbchen öffnen und schließen lässt und das Körbchen nach Verbrauch des Mittels wieder gefüllt werden kann.

Weiterhin gibt es wiederbefüllbare Körbchen, die eine nach oben oder zur Seite offene Öffnung aufweisen, durch die nach Verbrauch neue stückförmige WC-Reinigungsmittel in das Körbchen hineingeschoben werden können.

Weiterhin gibt es Einmalkörbchen, die nach Verbrauch des Mittels weggeworfen werden. Bei den Einmalkörbchen gibt es wiederum WC-Körbchen, bei deren Herstellung das stückförmige Reinigungsmittel während des Herstellens in das Körbchen eingeschlossen wird. Ein solches Körbchen wird als Ganzes nach Entleerung entsorgt.

In einer Variante von solchen Einmalkörbchen sind die Behältnisse schalenförmig, und das Reinigungsmittel wird während des Herstellens beispielsweise als Schmelze in das schalenförmige Behältnis gegossen und erstarrt dann. Nach der Entleerung werden das leere Behältnis und ggfs. auch die daran befindliche Hängevorrichtung weggeworfen.

Die WC-Körbchen werden zusammen mit den Reinigungsmitteln im Allgemeinen in einer Blisterverpackung angeboten. Die Blisterverpackung dient nicht nur zur Befestigung des WC-Körbchens und des Reinigungsmittels an dem Blisterkarton, sondern auch dazu, ein Verdampfen der Duftstoffe aus dem Reinigungsmittel zu verhindern.

Häufig werden WC-Körbchen, die im Allgemeinen Öffnungen zum Ein- und Austritt des Spülwassers aufweisen, mittels Spritzguss hergestellt. Die Spritzgusskörbchen sind formbeständig und optisch ansprechend und lassen sich in einer Vielzahl von Formen herstellen. Allerdings ist das Herstellungsverfahren recht aufwendig, zur Herstellung eines solchen Körbchens wird relativ viel Kunststoff eingesetzt und zudem muss bei Veränderung der Form des Körbchens jeweils eine neue Spritzgussform hergestellt werden, was teuer ist.

Aus der EP 3 121 342 A1 ist ein Behälter für ein WC-Reinigungsmittel bekannt, der zwei mit einem Scharnier verbundene Schalenhälften aufweist, wobei eine Schalenhälfte eine oder mehrere Halbschalen zur Aufnahme von Reinigungsmittel und keine Durchbrechungen aufweist und die andere Schalenhälfte auf der den Halbschalen gegenüberliegenden Seite Vertiefungen mit Durchbrechungen aufweist, durch die das Spülwasser an die Oberfläche des in den Näpfen befindlichen Mittels gelangen und dieses auflösen kann. Die Durchbrechungen befinden sich in einer ebenen Fläche der Vertiefung in der anderen Schalenhälfte.

Im geschlossenen Zustand bildet jeweils eine Halbschale und die Vertiefung mit der Durchbrechung eine Kammer zur Aufnahme des Reinigungsmittels. Dieses Behältnis wird am Rand der WC-Schüssel verklemmt.

Durch die Ausgestaltung des Behälters lässt sich dieses durch Thermoformen und Stanzen aus einer Folie herstellen, so dass solche Behältnisse einfach und mit wenig Materialaufwand und somit kostengünstig herstellbar sind.

Nachdem das Reinigungsmittel in diesem Behälter in der geschlossenen Halbschale aufgenommen ist und das Wasser an das Reinigungsmittel nur durch den Durchtritt des Spülwassers durch die Durchbrechungen in den Vertiefungen auf der gegenüberliegenden Seite gelangt, spülen sich Reinigungsmittel in solch einem Behältnis nicht hinreichend gut ab.

Aufgrund der Ausgestaltung kann es zudem dazu kommen, dass Spülwasser in dem Behälter verbleibt und sich der Wirkstoff somit nicht richtig entfalten kann.

Die EP 3 214 232 A1 lehrt ebenfalls ein WC-Körbchen, das sich durch Thermoformen und Stanzen herstellen lässt. Um den Spülwasseraustritt zu gewährleisten, weist dieses WC-Körbchen in der Betriebsposition im unteren Bereich zwischen der ersten und der zweiten Schalenhälfte einen Spalt auf, durch den das Spülwasser aus dem Körbchen austreten kann.

Aus der WO 2018/009336 A1 ist ein WC-Körbchen bekannt, das eine Hängevorrichtung mit einem lösbaren Rastelement und eine blisterartige Kassette mit einem korrespondierenden Rastelement aufweist, so dass die Kassette mit der Hängevorrichtung verbunden werden und die Kassette nach Entleerung von der Hängevorrichtung entfernt und durch eine neue Kassette ausgetauscht werden kann. Die Kassette weist eine Schale und eine Abdeckung auf, und in der Schale befindet sich das Reinigungsmittel, das in die Schale eingegossen sein kann. Zur Ingebrauchnahme wird die Abdeckung von der Schale entfernt und die Hängevorrichtung mit dem Reinigungsmittel in der Schale in die Toilettenschüssel gehängt. Die Schale ist bis auf die große Eintrittsöffnung geschlossen und wird durch Thermoformen hergestellt.

Dieses WC-Körbchen mit ersetzbarer Kassette ist hygienisch und umweltfreundlich, da es die Wiederverwendung der Hängevorrichtung ermöglicht und das Behältnis für das Reinigungsmittel, das in die Toilettenschüssel hineinreicht und das unter Umständen verschmutzt sein könnte, weggeworfen wird. Zur Umweltfreundlichkeit und zu geringen Herstellungskosten trägt auch bei, dass die Schale durch Thermoformen aus einer Folie hergestellt wird, was kostengünstig ist und wodurch - verglichen mit dem Spritzguss - eine erhebliche Menge an Kunststoff eingespart werden kann.

Nachteilig ist jedoch auch bei diesem WC-Körbchen, dass sich das Mittel nicht hinreichend gut abspült.

Aus der EP 3 263 786 A1 ist ein Verfahren zum Befüllen eines Sanitärmittels in einen Behälter bekannt. Zunächst wird ein Behälterkörper, der Schlitze aufweist und zur Aufnahme von gelförmigen Sanitärmitteln dient, bereitgestellt. Anschließend wird ein wasserlösliches Material über die Schlitze in den Behälter gelegt, um die Schlitze abzudecken. In den Behälter wird nun das gelförmige Sanitärmittel gegossen, das dort erstarrt. Der Behälter mit dem eingegossenen Gel wird nun an der Hängevorrichtung befestigt und in die Toilettenschüssel gehängt. Beim ersten Spülen löst sich das in den Schlitzen befindliche wasserlösliche Material auf und Wasser gelangt durch die Schlitze zu dem gelförmigen Reinigungsmittel.

Die Herstellung des Behälters erfolgt mit Spritzguss.

Dieses Verfahren ermöglicht es, in Schalen mit Schlitzen gegossene Gele bereitzustellen, wobei sich die Gele im Gebrauch infolge der Schlitze gut abspülen. Die Gelschalen können nach Entleerung von der Hängevorrichtung entfernt und weggeworfen und durch eine neue gefüllte Gelschale ersetzt werden.

Aus der WO 2016/040341 A1 ist ein Verfahren zur Herstellung eines Behältnisses mit wenigstens einer Öffnung zur Bevorratung von Reinigungsmittel für ein WC-Körbchen bekannt, wobei eine Polymerfolie bereitgestellt wird und in die Polymerfolie wenigstens eine Öffnung gestanzt wird und die wenigstens eine Öffnung mit einem im Wesentlichen gasdichten oder wieder entfernbaren Verschlussmaterial verschlossen wird. Dieses Dokument wird als nächstliegender Stand der Technik angesehen. Der Oberbegriff des Anspruchs 1 entspricht diesem Dokument.

Diese Verfahren sind allerdings aufwändig und kostenintensiv.

Die Aufgabe der vorliegenden Erfindung besteht darin, ein einfaches und kostengünstiges Verfahren zum Herstellen eines Behältnisses für WC-Reinigungsmittel mit einem guten Auflöseverhalten anzugeben und ein kostengünstiges und umweltfreundliches Behältnis für Reinigungsmittel für WC-Körbchen bereitzustellen.

Diese Aufgabe wird durch die Merkmale des Anspruchs 1 und 6 gelöst.

Das erfindungsgemäße Behältnis für WC-Reinigungsmittel weist Öffnungen für eine gute Abspülbarkeit auf und lässt sich kostengünstig und umweltfreundlich mittels Thermoformen herstellen.

Bei dem erfindungsgemäßen Herstellungsverfahren werden in eine Polymerfolie eine oder mehrere Öffnungen gestanzt, und die Öffnung(en) werden anschließend mit einem wiederentfernbaren Verschlussmaterial, das im Wesentlichen gasdicht ist, wieder verschlossen. Die Folie mit der bzw. den verschlossenen Öffnung(en) wird dann in einem Thermoformprozess in die gewünschte dreidimensionale Behältnisform, die vorzugsweise schalenförmig ist, geformt.

Der erste Schritt des erfindungsgemäßen Verfahrens ist das Stanzen der Öffnung(en) in eine ebene Polymerfolie, was einfach und kostengünstig zu bewerkstelligen ist. Durch diese Öffnungen soll bei dem fertiggestellten Behältnis später im Gebrauch der Wasserdurchtritt in den Behältnisinnenraum zu dem aufzulösenden Reinigungsmittel erfolgen.

Allerdings bewirken die in die an sich gasdichte Folie gestanzten Öffnungen, dass sich die Folie mit den Öffnungen nicht mittels des Thermoformprozesses in die gewünschte Form, insbesondere Schalenform, formen lässt, da infolge der Öffnungen kein Formen der erwärmten Folie mittels Druckluft oder Unterdruck erfolgen kann.

Dieses Problem wird erfindungsgemäß dadurch gelöst, dass die gestanzten Öffnungen mit einem wiederentfernbaren Verschlussmaterial im Wesentlichen gasdicht verschlossen werden, so dass der Verbund aus Polymerfolie und dem im Wesentlichen gasdichten Verschlussmaterial während des Thermoformprozesses mittels Unterdruck oder Druckluft geformt und das Vakuum gehalten werden kann, so dass die behandelte Polymerfolie somit die gewünschte dreidimensionale Behältnisform, beispielsweise eine Schalenform, exakt nachbildet.

Damit erhält man ein aus der Polymerfolie geformtes Behältnis mit Öffnungen, die mit dem wiederentfernbaren Verschlussmaterial abgedeckt sind. In solch ein Behältnis, beispielsweise in Schalenform, kann nun beispielsweise heiße Gelmasse eingefüllt werden, die dann erkaltet.

Das Behältnis mit dem eingegossenen oder auf sonstige Weise gefüllten Reinigungsmittel kann dann mit einem Behältnisdeckel verschlossen werden. Vorzugsweise ist der Behältnisdeckel ebenfalls aus dem Polymermaterial und wird mit dem thermogeformten Behältnis ebenfalls im Wesentlichen gasdicht verbunden, beispielsweise durch Verkleben. Der Behältnisdeckel kann auch eine Folie sein, die die Behältnisöffnung im Wesentlichen gasdicht verschließt.

Ein solches Behältnis mit Reinigungsmittel, das mit einem Deckel verschlossen ist, kann dann mit einer entsprechenden Hängevorrichtung, die zur Befestigung an dem Toilettenrand dient, verbunden, insbesondere eingeklipst, eingehängt oder verrastet werden. Hierdurch wird ermöglicht, dass das Behältnis mit dem Reinigungsmittel und ggfs. dem Deckel nach dessen Entleerung entsorgt und die Hängevorrichtung, an der dann ein neues mit Reinigungsmittel befülltes Behältnis befestigt werden kann, wiederverwendet werden kann.

Somit kann das in die Toilettenschüssel ragende, vom Verbraucher als unhygienisch empfundene Behältnis nach der Entleerung fortgeworfen, jedoch die nicht in das Toilettenbecken ragende, wenig verschmutzte Hängevorrichtung wiederverwendet werden.

Das Behältnis mit dem Reinigungsmittel und/oder der Behältnisdeckel weisen vorzugsweise Mittel auf, um die Hängevorrichtung lösbar zu befestigen. In einer ersten kostengünstigen Variante wird das Behältnis mittels entsprechender an dem Deckel vorgesehener Schlitze einfach in Haken, die an der Hängevorrichtung vorgesehen sind, eingehängt. Nach der Entleerung wird das Behältnis von dem Haken an der Hängevorrichtung genommen und kann durch ein neues Behältnis mit Reinigungsmittel ersetzt werden.

In einer weiteren Variante wird das Behältnis mit dem Reinigungsmittel und dem Deckel an der Hängevorrichtung verrastet, eingehängt oder eingeklipst. Auch andere Befestigungsarten wie Druckknöpfe, Karabiner oder Magnetverschlüsse sind möglich.

Durch das erfindungsgemäße Verfahren kann die Bereitstellung einer kostenintensiven Stanzeinheit für das Stanzen von aus einer Polymerfolie thermogeformten dreidimensionalen Behältnissen, die bei einem nach dem Thermoformen erforderlichen Stanzschritt erforderlich wären, entfallen.

Ein weiterer wesentlicher Vorteil der vorliegenden Erfindung besteht darin, dass das aus der gestanzten Polymerfolie mit dem gasdichten Verschlussmaterial geformte Behältnis und der Behältnisdeckel ebenfalls im Wesentlichen gasdicht sind, so dass flüchtige Verbindungen wie z.B. Duftstoffe in einem in dem Behältnis mit Deckel befindlichen Reinigungsmittel nicht verdampfen können.

Damit erfüllt das mit dem gasdichten Verschlussmaterial verschlossene Behältnis mit Deckel die Anforderungen an eine im Wesentlichen gasdichte Verpackung, d.h. das mit dem gasdichten Verschlussmaterial verschlossene Behältnis mit Deckel kann ohne weitere Blisterverpackung in einer üblichen nicht gasdichten Verpackung wie einer Kartonage angeboten werden und die übliche Blisterfolie und die damit verbundenen Kosten können somit entfallen. Auch das "Einpacken" des Reinigungsmittels in eine wasserlösliche Folie, das dazu dient, ein Entweichen der Duftstoffe und ein Verschmutzen der Hände bei der Handhabung zu vermeiden, ist nicht erforderlich.

Falls gewünscht, kann auch der Behältnisdeckel wie das Behältnis aus einer Polymerfolie mit der Stanzung von Öffnungen für den Wasserdurchtritt, anschließendem Kaschieren oder Verschließen der Öffnungen mit einem vorzugsweise wasserlöslichen Verschlussmaterial und ggfs. anschließenden Verformen hergestellt werden.

Ein solches Behältnis mit Behältnisdeckel und freispülbaren Öffnungen auf beiden Seiten ermöglicht einen sehr guten Eintritt des Spülwassers von beiden Seiten und somit eine gute Auflösung des Reinigungsmittels.

Ein weiterer Vorteil besteht darin, dass die in dem erfindungsgemäßen Behältnis verpackten Reinigungsmittel nicht nur gasdicht sind, sondern gleichzeitig auch kindersicher sind.

Als gasdichtes, wiederentfernbares Verschlussmaterial kann beispielsweise ein wasserlösliches Polymermaterial, insbesondere eine wasserlösliche Polymerfolie, aber auch ein selbstklebendes Etikett oder eine Aufreißlasche eingesetzt werden.

Für die Herstellung von WC-Körbchen mit Öffnungen in den Behältnissen ist bevorzugt, als Verschlussmaterial ein wasserlösliches Polymer, insbesondere eine wasserlösliche Polymerfolie, einzusetzen, da sich diese sehr gut auf die Polymerfolie kaschieren lässt und sich somit auf einfache Weise ein Verbund bzw. ein Laminat aus Polymerfolie und wasserlöslicher Folien herstellen lässt, das dann thermogeformt wird.

Wird ein solches WC-Körbchen mit einer Hängevorrichtung, an der ein solches Behältnis mit Reinigungsmittel befestigt ist, wobei die Öffnungen in dem Behältnis mit einem gasdichten wasserlöslichen Material verschlossen sind, nun bei der Ingebrauchnahme beim ersten Überspülen mittels Spülwasser überspült, so fließt Spülwasser über das wasserlösliche Material und löst dieses auf, so dass die Öffnungen zugänglich werden und Wasser in den Innenraum des Behältnisses gelangt und dort befindliches Reinigungsmittel nach und nach auflösen kann.

In einer Alternative werden die Öffnungen in der Polymerfolie mit einem im Wesentlichen gasdichten Etikett zugeklebt, so dass die Öffnungen gasdicht verschlossen sind.

Ist das wiederentfernbare gasdichte Material ein nicht wasserlösliches Etikett, so kann dieses beispielsweise vor der Ingebrauchnahme des Körbchens einfach wieder von den Öffnungen abgezogen werden.

Dadurch, dass das Behältnis durch den Thermoformprozess und nicht durch Spritzguss hergestellt werden kann, können Behältnisse mit einem geringeren Gewicht und somit weitaus weniger Polymermaterial erhalten werden. Nachdem die Behältnisse im Allgemeinen nach der Entleerung weggeworfen werden, sind Behältnisse mit einer geringeren Polymermasse umweltfreundlich und zudem kostengünstiger.

Ein weiterer Vorteil des erfindungsgemäßen Thermoformens von Behältnissen mit Öffnungen ist, dass die Werkzeugformen für den Thermoformprozess weitaus einfacher und kostengünstiger herstellbar sind als die Werkzeugformen für den Spritzgussprozess. Die größten Kosten bei Spritzgussverfahren resultieren von den Kosten für die Spitzgussform. Das erfindungsgemäße Verfahren mit den weitaus kostengünstigeren Thermoformwerkzeugformen eignet sich somit insbesondere für nicht allzu große Stückzahlen von Behältnissen mit Öffnungen oder wenn verschieden geformte Behältnisse mit Öffnungen gewünscht sind. Nach dem erfindungsgemäßen Verfahren lassen sich kostengünstig und auf einfache Weise Behältnisse für nahezu jede Reinigungsmittelform herstellen.

Ein weiterer Vorteil des erfindungsgemäßen Behältnisses ist, dass dieses aus einem transparenten Polymermaterial hergestellt werden kann und somit das Design des jeweiligen Reinigungsmittels für den Verbraucher gut sichtbar ist.

Ein weiterer Vorteil des erfindungsgemäßen Thermoformens ist der im Vergleich zum Spritzgießen geringere Energiebedarf.

Als Polymerfolienmaterial kann grundsätzlich ein jedes thermoplastisches Polymermaterial eingesetzt werden, das in Form von Folien herstellbar ist. Um mittels Thermoformen verarbeitet werden zu können, sollten die Polymerfolien im Wesentlichen gasdicht sein. Vorzugsweise wird ein Folienmaterial aus Polyethylenterephthalat (PET), Polyethylen (PE), Polypropylen (PP), Polystyrol (PS), Polyvinylchlorid (PVC) eingesetzt. Auch der Einsatz von recycelten Materialen oder mehrschichtigen Folien wie PS-EVOH-PE oder PP-EVOH-PE ist möglich (EVOH: Ethylen-Vinylalkohol-Copolymer).

Das Polymerfolienmaterial sollte eine gewisse Formstabilität aufweisen und Stabilität gegenüber mechanischer Belastung bei der Lagerung, dem Transport und der Anwendung geben. Zudem muss die Folie eine gewisse Resistenz gegenüber äußeren Einflüssen wie Feuchtigkeit oder Chemikalien aufweisen.

Im Allgemeinen beträgt die Dicke der Polymerfolien zwischen 70 und 700 µm.

Als Verschlussmaterial kann ein wasserlösliches Polymermaterial, insbesondere eine Polymerfolie, aber auch ein nicht wasserlösliches Etikett aus Papier oder Kunststoff eingesetzt werden.

Als wasserlösliches Verschlussmaterial kann Polyvinylalkohol, Polyvinylpyrrolidon, Polyalkylenoxid, Polyacrylat, Polyacrylatamide, Polyamid, Acrylmaleinsäurecopolymere, Polysaccharid, Gelatine, Cellulosederivate im Allgemeinen wie beispielsweise Hydroxyethyl-, Methy- und Propylcellulose, Maltodextrine, etc. eingesetzt werden. Es können auch Verschlussmaterialien auf Basis nachwachsender Rohstoffe wie beispielsweise aus Soja, Milchproteine oder Stärke eingesetzt werden. Geeignet als Verschlussmaterial ist auch thermoplastisch bioabbaubares Granulat, das Kaseinat oder Kasein, Plastifizierungsmittel wie Wasser, Glycerin, Sorbitol, Mannitol, Maltitol oder Ethylenglycol, und einen bioabbaubaren Polyester, beispielsweise Poly(butylenadipatcobutylenterephthalat) umfasst. Solch ein thermoplastisch bioabbaubares Granulat ist aus der WO 2012/010421 A1 bekannt.

Diese wasserlöslichen Verschlussmaterialien sind vorzugsweise Folien und werden vorzugsweise auf das Polymerfolienmaterial so kaschiert, dass das Polymerfolienmaterial und die Verschlussmaterialfolie im Wesentlichen gasdicht sind. Die Verklebung kann beispielsweise mittels PVA-Lösung, anderen Lösungen von wasserlöslichen Polymeren oder üblichen Kaschierklebern oder Sprühklebern erfolgen, wie sie von der Firma Meyco als "Sprühkleber, kristallklar" angeboten werden. Auch ist eine Verklebung mit wasserlöslichen Kaschierklebern, wie Polyurethanbasierten Klebstoffen, möglich. Derartige Kleber werden beispielsweise als Zweikomponentenkleber BEST-PU 0587 von der Firma Best Klebstoffe GmbH & Co. KG vertrieben.

Diese Verschlussmaterialfolie ist vorzugsweise zwischen 50 µm und 500 µm dick. Derartige Folien - beispielsweise aus PVA - sind unter der Bezeichnung M8310 mit einer Dicke von 88 µm bei der Firma Monosol, LLC erhältlich.

Auch ist eine Verklebung mit wasserlosen Kaschierklebern wie PUbasierten Klebstoffen möglich.

Unter "im Wesentlichen gasdicht" wird im Rahmen der vorliegenden Erfindung verstanden, dass die Folien wenigstens so gasdicht sind, dass kurzzeitig Unterdruck oder Druckluft angelegt werden kann, um die Folien in die gewünschte dreidimensionale Form zu Verformen. Vorzugsweise sind die Folien so dicht, dass sie eine Sperre für Wasserdampf oder Duftstoffe über einen gewissen Zeitraum bilden.

Insbesondere ist unter "im Wesentlichen gasdicht" im Rahmen der vorliegenden Erfindung zu verstehen, dass die Konzentration eines Duftstoffes in einem Reinigungsmittel, das mit einer Folie verpackt ist, nach 2 Wochen um höchstens 30 % abgenommen hat, vorzugsweise nach 2 Wochen um höchstens 20 % und besonders bevorzugt nach 6 Wochen um höchstens 20 %.

In einer bevorzugten Variante ist das Behältnis wannenförmig und weist einen umlaufenden, senkrecht zu den Wannenwänden verlaufenden ebenen Rand auf, der zur Befestigung, insbesondere Verklebung oder Verschweißen mit dem Deckel, dient. An dem Deckel können Öffnungen zur Befestigung an der Hängevorrichtung vorgesehen sein.

Die Hängevorrichtung wird im Allgemeinen mittels Spritzguss hergestellt. Sie weist einen Haken zur Befestigung am Toilettenrand auf und Mittel zur Befestigung des Behältnisses. Grundsätzlich können an einer Hängevorrichtung auch mehrere Behältnisse befestigt werden.

Um die Verschmutzung der Hängevorrichtung in der Toilettenschüssel so gering wie möglich zu halten, wird in einer bevorzugten Ausführungsform nach dem Entleeren das Behältnis mit dem Behältnisdeckel, somit alle in die Toilettenschüssel hineinragenden Teile, weggeworfen. Sind nun die Befestigungsmittel an dem Behältnisdeckel vorgesehen und befinden sich diese und damit auch die korrespondierenden Befestigungsmittel an der Hängevorrichtung bei einem in der Schüssel befestigten Mittel oberhalb des Reinigungsmittels, so ist die Wahrscheinlichkeit der Verschmutzung der wiederverwendbaren Hängevorrichtung gering.

In einer weiteren Variante ist der Behältnisdeckel ein Teil der Hängevorrichtung und an dieser im unteren Bereich angeformt. Das Behältnis mit dem Reinigungsmittel kann dann beispielsweise auf den sich an der Hängevorrichtung befindlichen Deckel aufgeklipst oder aufgeschoben und nach der Entleerung wieder entfernt werden. Diese Variante bringt allerdings den Nachteil mit sich, dass der Verbraucher beim Befüllen das in die Toilettenschüssel hineinragende Ende der Hängevorrichtung mit dem Deckel berühren muss.

Die vorliegende Erfindung wird nun anhand von Ausführungsbeispielen näher beschrieben.

Es zeigen:
Figur 1: die Ansicht auf die Außenseite des erfindungsgemäßen Behältnisses,
Figur 2: die Draufsicht auf die Innenseite des Behältnisses aus Figur 1,
Figur 3a und 3b: zwei Varianten des Behältnisdeckels,
Figur 4: das Behältnis aus Figur 1 bis 3 an einer Hängevorrichtung in einer Toilettenschüssel,
Figur 5: eine schematische Darstellung des erfindungsgemäßen Verfahrens mit den Schritten a) bis i) und
Figur 6 eine schematische Darstellung der Schichtabfolge des Folienquerschnitts des Behältnisses.

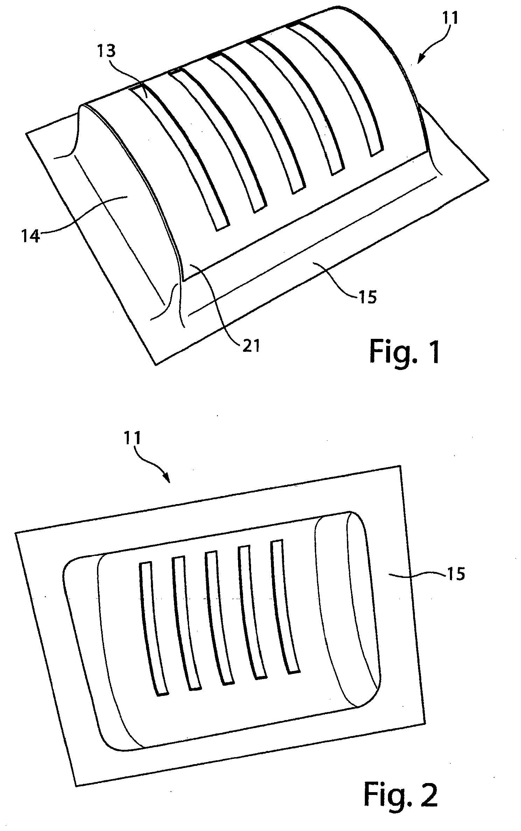

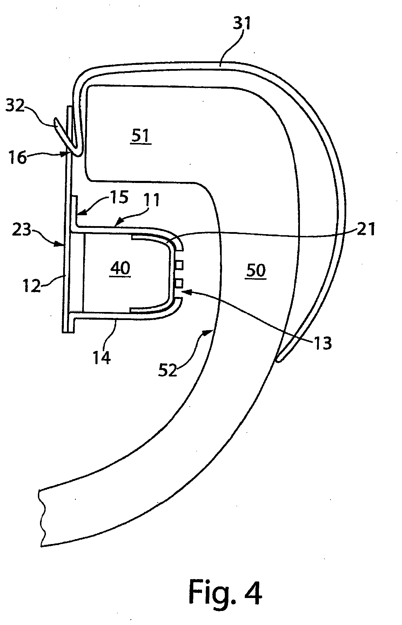

Figur 1 und 2 zeigen ein Behältnis 11, das eine halbzylinderförmige Schale 14 mit einem umlaufenden Rand 15 aufweist. Die halbzylinderförmige Schale 14 dient zur Aufnahme des Reinigungsmittels 40. Figur 1 zeigt die Ansicht auf die Außenseite des Behältnisses 11, somit die Ansicht auf die Seite, die, wenn das Behältnis 11 in der Toilettenschüssel 50 eingehängt ist, in Richtung der Toilettenschüsselwand 52 weist, vgl. Figur 4. Figur 2 zeigt in Draufsicht auf die Innenseite des offenen Behältnisses 11.

In der Schale 14 sind fünf längliche Öffnungen 13 vorgesehen, die mit einem Folienstück als Verschlussmaterial 21 gasdicht verschlossen sind. Das Folienstück 21 ist in einer ersten Ausführungsform eine wasserlösliche Folie, die auf der Außenseite 23 des Behältnisses 11 auf die Öffnungen 13 aufgeklebt ist.

Das Folienstück 21 wurde vor dem Thermoformprozess auf die in die Polymerfolie 20 ausgestanzten Öffnungen 13 aufgeklebt, wie weiter unten beschrieben.

Diese wasserlösliche Folie 21 kann bei der ersten Ingebrauchnahme durch das Überspülen mit Wasser entfernt werden und damit die Öffnungen 13, durch die das Wasser an die Oberfläche des Reinigungsmittels 40 gelangen kann, freigespült werden.

Selbstverständlich kann die Schale 14 auch eine andere Form aufweisen, solange sich diese mittels Thermoformen herstellen lässt. Auch die Anzahl, Form und Anordnung der Öffnungen 13 kann selbstverständlich variieren. Durch die Größe und Anzahl der Öffnungen 13 kann das Abspülverhalten und die Spülzahl des Reinigungsmittels 40 verändert werden.

Am oberen Ende der nach oben offenen Schale 14 erstreckt sich ein nach außen umlaufender ebener Rand 15, vgl. Figur 2. Der Rand 15 dient dazu, das Behältnis 11 nach der Befüllung mit dem Reinigungsmittel 40 mit dem Behältnisdeckel 12 vorzugsweise gasdicht zu verschließen. Hierbei können geeignete und übliche Verschlussverfahren wie Heißsiegeln, Ultraschallsiegeln oder auch Verkleben mit einem Klebstoff wie z.B. Polyvinylalkohollösung zum Einsatz kommen. Die Breite des Rands 15 beträgt vorzugsweise zwischen 2 mm und 10 mm.

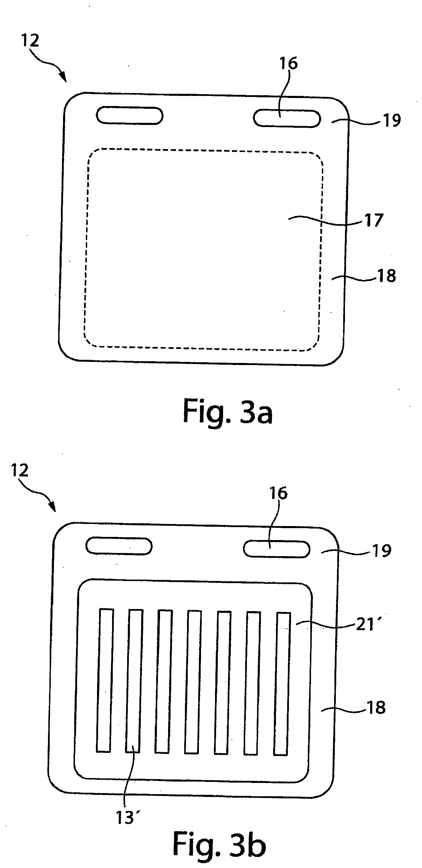

In Figur 3 sind zwei Varianten der Behältnisdeckel 12 dargestellt. Figur 3a zeigt einen einfachen Behältnisdeckel 12 aus nicht wasserlöslicher Polymerfolie 20, der mit seinem gestrichelten Bereich 17 die Öffnungen 13 in der Schale 14 abdecken und mit seinem Rand 18 mit dem Rand 15 des Behältnisses 11 verbunden wird. Für ein ansprechendes Aussehen kann die Sichtseite 23 des Behältnisdeckels 12 in der Toilettenschüssel 50 dekorativ gestaltet sein.

Oberhalb des Abdeckbereichs 17 ist ein Folienabschnitt 19 mit länglichen Befestigungsschlitzen 16 vorgesehen. Durch diese Befestigungsschlitze 16 können die an der Hängevorrichtung 31 vorgesehenen Befestigungshaken 32 gesteckt werden, so dass das mit dem Reinigungsmittel 40 gefüllte Behältnis 11 mit Behältnisdeckel 12 an der Hängevorrichtung 31 am Rand der Toilettenschüssel 50 befestigt werden kann, vgl. Figur 4.

In der zweiten Deckelvariante in Figur 3b weist der aus einer nicht wasserlöslichen Kunststofffolie 20' bestehende Behältnisdeckel 12 ebenfalls eingestanzte Öffnungen 13' auf, die entsprechend dem zuvor beschriebenen Behältnis 11 ebenfalls mit einer wasserlöslichen Folie 21' verschlossen sein können. Der Behältnisdeckel 12 ist vorzugsweise eben, er kann jedoch auch entsprechend dem Behältnis 11 durch Stanzen aus einer Folie, Verschließen der Öffnungen 13 und anschließendem Thermoformen dreidimensional geformt sein. Entsprechend dem zuvor beschriebenen Behältnis 11 wird auch diese wasserlösliche Folie 21' beim ersten Überspülen abgespült.

Das Behältnis 11 mit Öffnungen 13, das von dem Behältnisdeckel 12 mit Öffnungen 13' abgedeckt wird, ermöglicht nach dem Freispülen des Verschlussmaterials 21 bzw. 21' im Spülwasserstrom somit einen Eintritt des Spülwassers zum Reinigungsmittel 40 sowohl durch die Schale 14, als auch durch den Behältnisdeckel 12.

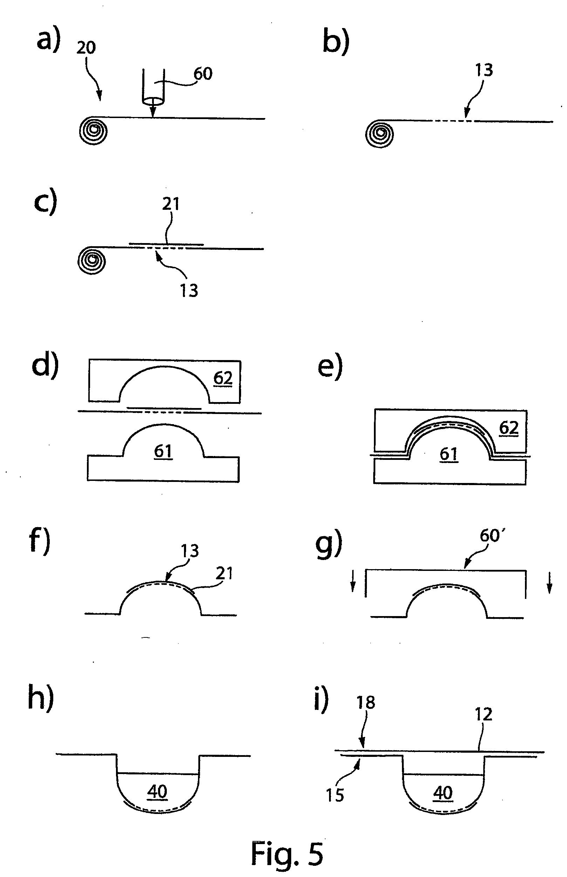

Das erfindungsgemäße Verfahren ist schematisch in den Figuren 5a bis 5i dargestellt.

Gasundurchlässige Polymerfolie 20 wird von einer Rolle abgewickelt, und in die ebene Polymerfolie 20 werden in einer Fläche von ca. 40 x 60 mm fünf längliche Öffnungen 13 mit einer Stanze 60 gestanzt, vgl. Figur 5a, b. Über die Öffnungen 13 wird nun eine wasserlösliche PVA-Folie als gasdichtes Verschlussmaterial 21 mit Polyvinylalkohollösung als Klebstoff geklebt, vgl. Figur 5c, so dass die Öffnungen 13 gasdicht verschlossen sind.

Die PVA-Folie 21 kann ebenfalls von einer Rolle abgewickelt werden und auch vollflächig auf die Polymerfolie 20 mit den gestanzten Öffnungen 13 kaschiert werden, so dass ein Verbund bzw. Laminat erhalten wird.

Wesentlich beim Verfahrensschritt in Figur 5c ist, dass der Verbund aus Polymerfolie 20 mit den Öffnungen 13 und dem Verschlussmaterial 21 gasdicht ist.

Anschließend wird der Verbund aus Polymerfolie 20 und Verschlussmaterial 21 in einer Aufwärmstation ein- oder beidseitig erwärmt. Der Vorstrecker 61 und das Thermoformwerkzeug 62 fahren dann durch die erweichte Folienebene hindurch und geben die fertige Kontur schon grob vor, vgl. Figur 5d, e. Dann kommt Druckluft von der einen und Vakuum von der anderen Seite, um die Folie rasch und stark an die wassergekühlte Wandung (Kontur) des Formwerkzeuges zu bringen (nicht dargestellt). Durch kleine Löcher oder Schlitze entweicht die Luft zwischen dem Folienverbund 20, 21 und Werkzeug. Der erkaltete, nun feste Folienverbund 20, 21 wird von dem Formwerkzeug getrennt und im nächsten Arbeitstakt der Ausstanzstation 60' zugeführt, vgl. Figur 5f, g.

Das erkaltete Behältnis 11 mit den Öffnungen 13 und der kaschierten wasserlöslichen Folie 21 wird nun mit der heißen Reinigungsmittelmasse 40 befüllt und erkalten gelassen (Figur 5h). Anstatt heißer, geschmolzener Reinigungsmittelmasse kann ebenso ein fester, bspw. extrudierter oder tablettierter, Reinigungsmittelformkörper in die Kavität eingelegt werden.

Anschließend wird das Behältnis 11 mit einem Behältnisdeckel 12, der auf den Rand 15 des Behältnisses 11 gesiegelt oder aufgeklebt wird, gasdicht verschlossen, Fig. 5i.

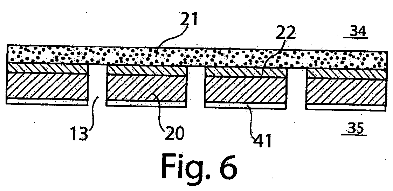

Figur 6 zeigt schematisch die Schichtabfolge des Folienverbundes des Behältnisses 11.

Der Verbund besteht aus einer außenliegenden PVA-Folie 21, welche sich bei Wasserkontakt auflöst, und einer oder mehrerer innenliegenden Polymerfolien 20 mit gestanzten Öffnungen 13.

Die PVA-Folie 21 ist mit der gestanzten Polymerfolie 20 mit einem Kaschierkleber 22 verklebt. Nach dem erstmaligen Überspülen mit Wasser werden die Öffnungen 13 durchlässig, da die PVA-Folie 21 sich auflöst, sodass Wasser vom Außenraum 34 in den Innenraum 35 des Behältnisses 11 gelangen kann und das dort befindliche Reinigungsmittel 40 auflöst.

Die Geometrie und Lage der Öffnungen 13 ist so gewählt, dass diese nicht beziehungsweise möglichst wenig durch den Umformvorgang beim Thermoformen beeinflusst beziehungsweise verändert werden.

Das außenliegende Verschlussmaterial 21 ist mittels eines elastischen Kaschierklebers 22, der für das Thermoformen geeignet ist, mit der innenliegenden perforierten Folienschicht 20 verbunden. Der Kaschierkleber 22 wird auf die Polymerfolie 20 aufgetragen, um das Auflöseverhalten der PVA-Folie 21 im Bereich der Öffnungen 13 nicht zu beeinflussen. Der Kaschierkleber 22 kann auf Polyurethan basieren und ein chemisch härtender 2-Komponenten-PU-Klebstoff sein.

Optional kann eine Siegelschicht 41 auf der in Richtung Innenraum 35 weisenden Seite der Polymerfolie 20 aufgebracht sein, um ein leichteres Verbinden zwischen dem Rand 15 der Schale 14 und dem Behältnisdeckel 12 mit einem gängigen Heißsiegelverfahren zu ermöglichen. Beispielsweise kann diese Schicht 41 aus Polyethylen oder Polypropylen bestehen.

## Patentansprüche

1. Verfahren zur Herstellung eines Behältnisses (11) mit wenigstens einer Öffnung (13) zur Bevorratung von Reinigungsmittel (40) für ein WC-Körbchen (30), wobei eine Polymerfolie (20) bereitgestellt wird und in die Polymerfolie (20) wenigstens eine Öffnung (13) gestanzt wird, die wenigstens eine Öffnung (13) mit einem im Wesentlichen gasdichten und wiederentfernbaren Verschlussmaterial (21) verschlossen wird, **dadurch gekennzeichnet, dass** die Folie (20) mit der verschlossenen Öffnung (13) anschließend mittels Thermoformen dreidimensional verformt wird.

2. Verfahren nach Anspruch 1, **dadurch gekennzeichnet, dass** die Polymerfolie (20) aus der aus PET, Polyethylen, Polypropylen, Polystyrol oder mehrschichtigen Folien bestehenden Gruppe ausgewählt wird.

3. Verfahren nach Anspruch 1 oder 2, **dadurch gekennzeichnet, dass** das im Wesentlichen gasdichte und wiederentfernbare Verschlussmaterial (21) ein wasserlösliches Material, ein selbstklebendes Etikett oder eine Aufreißlasche ist.

4. Verfahren nach Anspruch 3, **dadurch gekennzeichnet, dass** das wasserlösliche Verschlussmaterial (21) aus der aus Polyvinylalkohol, Polyvinylpyrrolidon, Polyalkylenoxid, Polyacrylat, Polyacrylatamid, Polyamid, Acrylmaleinsäurecopolymer, Polysaccharid, Gelatine, Cellulosederivat, insbesondere Hydroxyethyl-, Methy- und Propylcellulose, Maltodextrin oder thermoplastischen bioabbaubaren Granulaten oder nachwachsenden Rohstoffen bestehenden Gruppe ausgewählt wird und insbesondere eine wasserlösliche Folie ist.

5. Verfahren nach Anspruch 1, **dadurch gekennzeichnet, dass** das Verschlussmaterial (21) eine Folie ist und auf die Polymerfolie (20) mit den Öffnungen (13) kaschiert wird.

6. Behältnis (11) mit Öffnungen (13), die mit einem im Wesentlichen gasdichten und wiederentfernbaren Verschlussmaterial (21) verschlossen sind, wobei das Behältnis nach einem der Ansprüche 1 bis 5 hergestellt ist, wobei das Behältnis (11) wenigstens ein Mittel (40) zur Reinigung von Toiletten umfasst, wobei das Mittel (40) vorzugsweise in das Behältnis (11) eingegossen ist.

7. Behältnis (11) mit Reinigungsmittel (40) nach Anspruch 6, **dadurch gekennzeichnet, dass** das Behältnis (11) mit einem Behältnisdeckel (12) verschlossen ist und Behältnis (11) und/oder Behältnisdeckel (12) Mittel (16) zur lösbaren Befestigung an einer Hängevorrichtung (31) aufweisen.

8. Behältnis (11) mit Reinigungsmittel (40) nach Anspruch 6, **dadurch gekennzeichnet, dass** das Behältnis (11) mit einem mit einer Hängevorrichtung (31) verbundenen Behältnisdeckel (12') lösbar verschließbar ist.

9. Behältnis (11) mit Reinigungsmittel (40) nach Anspruch 6, das mit einem Behältnisdeckel (12, 12') im Wesentlichen gasdicht verschlossen ist, **dadurch gekennzeichnet, dass** das Behältnis (11, 12, 12') mit dem Reinigungsmittel (40) in einer nicht gasdichten Verpackung, insbesondere einem Karton, verpackt ist.

10. Verwendung eines Behältnisses (11) mit Reinigungsmittel (40) nach einem der Ansprüche 6 bis 9 zur Unterhaltsreinigung von Toiletten, wobei das wiederentfernbare Verschlussmaterial (21) in den Öffnungen (13) bei der ersten Ingebrauchnahme entfernt und insbesondere durch das Spülwasser abgespült wird.

## Claims

1. A method of producing a container (11) having at least one opening (13) and serving for stocking a cleaning agent (40) to be used in a toilet rim block cage (30), a polymer film (20) being provided and at least one opening (13) being die-cut into said polymer film (20), said at least one opening (13) being closed by an essentially gas-tight and removable sealing material (21), **characterised in that** said film (20), with its at least one opening (13) closed, is then tridimensionally deformed by means of thermoforming.

2. The method as claimed in claim 1, **characterised in that** the polymer film (20) is selected from the group consisting of PET, polyethylene, polypropylene, polystyrene or multilayer films.

3. The method as claimed in claim 1 or 2, **characterised in that** said essentially gas-tight and removable sealing material (21) is a water-soluble material, a self-adhesive label, or a tear-off tab.

4. The method as claimed in claim 3, **characterised in that** the water-soluble sealing material (21) is selected from among the group consisting of polyvinyl alcohol, polyvinylpyrrolidone, polyalkylene oxide, polyacrylate, polyacrylatamide, polyamide, acrylic and maleic acid copolymer, polysaccharide, gelatine, cellulose derivatives, in particular hydroxyethyl cellulose, methy cellulose, and propyl cellulose, maltodextrine, or thermoplastic, biodegradable granules or regrowing raw materials, and **in that** it is, in particular, a water-soluble film.

5. The method as claimed in claim 1, **characterised in that** the sealing material (21) is a film and is laminated onto the polymer film (20) having the openings (13).

6. A container (11) having openings (13) which are closed by an essentially gas-tight and removable sealing material (21), said container being fabricated as claimed in any one of claims 1 to 5, wherein said container (11) comprises at least one agent (40) for cleaning toilets, said agent (40) being preferably poured into the container (11).

7. The container (11) holding a cleaning agent (40) as claimed in claim 6, **characterised in that** the container (11) is closed by a container lid (12) and **in that** the container (11) and/or the container lid (12) have means (16) allowing their removable attachment to a suspension device (31).

8. The container (11) holding a cleaning agent (40) as claimed in claim 6, **characterised in that** said container (11) may be removably closed by a container lid (12') which is connected to a suspension device (31).

9. The container (11) holding a cleaning agent (40) as claimed in claim 6 which is enclosed in an essentially gas-tight manner by means of a container lid (12, 12'), **characterised in that** said container (11, 12, 12') holding the cleaning agent (40) is packaged in a non-gas-tight packaging, in particular in a carton.

10. Use of a container (11) holding a cleaning agent (40) as claimed in any one of claims 6 to 9 and serving for the maintenance cleaning of toilets, wherein the removable sealing material (21) present in the openings (13) is removed, and in particular washed away by the toilet rinsing water, when the container is first being used.

## Revendications

1. Procédé destiné à fabriquer un récipient (11) avec au moins une ouverture (13) destiné à stocker du produit de nettoyage (40) pour un panier WC (30), un film polymère (20) étant fourni et dans ledit film polymère (20) étant découpée au moins une ouverture (13), ladite au moins une ouverture (13) étant fermée par un matériau d'obturation (21) qui est essentiellement étanche aux gaz et peut être retiré ultérieurement, **caractérisé en ce que** le film (20) avec l'ouverture (13) fermée est ensuite mis en forme de manière tridimensionnelle par thermoformage.

2. Procédé selon la revendication 1, **caractérisé en ce que** le film polymère (20) est choisi dans le groupe composé de PET, polyéthylène, polypropylène, polystyrène ou de feuilles multicouches.

3. Procédé selon la revendication 1 ou 2, **caractérisé en ce que** le matériau d'obturation (21) qui est essentiellement étanche aux gaz et peut être retiré ultérieurement est un matériau hydrosoluble, une étiquette autocollante ou une patte de déchirage.

4. Procédé selon la revendication 3, **caractérisé en ce que** le matériau d'obturation (21) hydrosoluble est choisi dans le groupe composé de : alcool polyvinylique, polyvinylpyrrolidone, polyoxyde d'alkylène, polyacrylate, polyacrylatamide, polyamide, copolymère d'acide acrylique et maléique, polysaccharide, gélatine, dérivé de cellulose, en particulier hydroxyéthylcellulose, méthylcellulose et propylcellulose, maltodextrine ou granulés thermoplastiques biodégradables ou matières premières renouvelables, et est en particulier un film hydrosoluble.

5. Procédé selon la revendication 1, **caractérisé en ce que** le matériau d'obturation (21) est un film et est doublé sur le film polymère (20) pourvu des ouvertures (13).

6. Récipient (11) pourvu d'ouvertures (13) lesquelles sont fermées grâce à un matériau d'obturation (21) qui est essentiellement étanche aux gaz et peut être retiré ultérieurement, dans lequel ledit récipient est fabriqué selon l'une quelconque des revendications 1 à 5, dans lequel ledit récipient (11) comprend au moins un produit (40) destiné à nettoyer des toilettes, dans lequel le produit (40) est versé de préférence dans le récipient (11).

7. Récipient (11) avec du produit de nettoyage (40) selon la revendication 6, **caractérisé en ce que** ledit récipient (11) est fermé par un couvercle de récipient (12) et **en ce que** le récipient (11) et/ou le couvercle de récipient (12) présentent des moyens (16) permettant la fixation amovible à un dispositif de suspension (31).

8. Récipient (11) avec du produit de nettoyage (40) selon la revendication 6, **caractérisé en ce que** ledit récipient (11) peut être fermé de manière amovible par un couvercle de récipient (12') relié à un dispositif de suspension (31).

9. Récipient (11) avec du produit de nettoyage (40) selon la revendication 6, fermé par un couvercle de récipient (12, 12') de manière essentiellement étanche aux gaz, **caractérisé en ce que** ledit récipient (11, 12, 12') avec le produit de nettoyage (40) est conditionné dans un emballage non étanche aux gaz, en particulier dans un carton.

10. Utilisation d'un récipient (11) avec du produit de nettoyage (40) selon l'une quelconque des revendications 6 à 9 en vue du nettoyage d'entretien de toilettes, dans laquelle le matériau d'obturation (21) dans les ouvertures (13) qui peut être retiré ultérieurement est retiré lors de la première utilisation et en particulier est éliminé par l'eau de la chasse.
